# EUROPÄISCHE PATENTSCHRIFT

(11) **EP 2 628 756 B1**
(45) Veröffentlichungstag und Bekanntmachung des Hinweises auf die Patenterteilung: **28.01.2015**
(21) Anmeldenummer: 12155553.6
(22) Anmeldetag: 15.02.2012
(51) Int. Cl.: C08G 18/48, C08G 18/50

(54) **Halbharte Schaumstoffe auf Polyurethanbasis, deren Herstellung und Verwendung**
Semi-rigid foams on a polyurethane basis, method for its manufacture and use
Mousses semi-dures à base de polyuréthane, leur fabrication et leur utilisation

(43) Veröffentlichungstag der Anmeldung: 21.08.2013
(73) Patentinhaber: Bayer Intellectual Property GmbH, 40789 Monheim (DE)
(72) Erfinder: Dr. Albach, Rolf, 51061 Köln (DE); Haselbach, Monika, 51061 Köln (DE); Fietz, Harald, 51377 Leverkusen (DE)
(74) Vertreter: BIP Patents

(56) Entgegenhaltungen:
- EP-A2- 0 477 920
- WO-A1-94/15983
- WO-A1-2008/031757
- DE-A1- 19 502 578
- DE-A1-102004 048 728
- DE-A1-102005 011 572

## Beschreibung

Die Erfindung betrifft halbharte Polyurethanschaumstoffe mit einer Dichte von 90 bis 180 kg/m³ und einer Stauchhärte von 20 bis 95 kPa, ein Verfahren zu deren Herstellung und ihre Verwendung.

Polyurethan-Halbhartschaumstoffe sind bekannt und vielfach beschrieben (Kunststoffhandbuch, Band 7, "Polyurethane", Carl Hanser Verlag München, Wien, 3. Auflage, 1993, Kapitel 5.4. und DE-A 10 2005 011 572). Ihre Herstellung erfolgt durch Umsetzung von Polyisocyanaten mit Verbindungen mit mindestens zwei mit Isocyanatgruppen reaktiven Wasserstoffatomen. Der Einsatz dieser Schaumstoffe erfolgt insbesondere im Innenraum von Kraftfahrzeugen, beispielsweise für die Herstellung von Instrumententafeln, Türseitenteilen, Mittelkonsolen, Armauflagen und Türbrüstungen. Häufig erfolgt der Einsatz dieser Schaumstoffe in Form von sogenannten Verbundelementen. Dabei werden Folien, zumeist aus Polyurethan oder PVC und Träger, zumeist aus Polycarbonat/ABS oder glasfaserverstärktem Polypropylen mit Polyurethan-Halbhartschäumen hinterschäumt.

Durch geeignete Wahl der Aufbaukomponenten und ihrer Mengenverhältnisse können Polyurethan-Schaumstoffe mit sehr guten mechanischen Eigenschaften hergestellt werden. Aus ökologischen Gründen wird soweit möglich auf (H)FCKW-haltige Treibmittel verzichtet, wobei als Alternative häufig Wasser als Treibmittel eingesetzt wird. Dies hat zwar Vorteile, allerdings auch diverse Nachteile. So weisen wassergetriebene Schäume zumeist verschlechterte mechanische Eigenschaften auf. Zur Behebung dieser Mängel und zur Erzielung gleicher oder verbesserter mechanischer Eigenschaften wurde vielfach die sogenannte Polyolkomponente der Schäume optimiert.

Die Nutzung von o-TDA-basierten Polyalkylenoxiden in Polyurethan-Hartschaumstoffen ist gut bekannt und beschrieben. In solchen harten Schaumstoffen sind die Monomere typischerweise überwiegend über Urethangruppen, vor allem mit sekundären Hydroxylfunktionen, verbunden und durch die Funktionalität der Polyetherpolyole und Polyisocyanate vernetzt.

Die Herstellung von halbharten Polyurethan-Schaumstoffen wird dagegen, wie allgemein bekannt, durch Umsetzung von hochmolekularen, vorzugsweise Polyesterpolyolen und/oder Polyetherpolyolen und gegebenenfalls Kettenverlängerungs- und/oder Vernetzungsmitteln mit organischen und/oder modifizierten organischen Polyisocyanaten durchgeführt. In solchen halbharten Schaumstoffen sind die Monomere typischerweise überwiegend über Harnstoffgruppen und in geringerem Umfang über Urethangruppen und vor allem mit primären Hydroxylfunktionen verbunden. Der Vernetzungsgrad ist gering, und die mittlere Funktionalität der Isocyanat-reaktiven Komponenten liegt normalerweise unter drei, während für Hartschaumstoffe Isocyanate mit mittleren Funktionalitäten von ≥2,8 eingesetzt werden.

Polyalkylenoxide aus 22-27 Gew.% Diaminotoluol und 73-78 Gew.-% Alkylenoxiden sind als Komponenten in Polyurethan-Hartschaumstoffen (US-A 5547998), flexiblen SRIM-Formteilen (GB-A 2308373 und CA 2157829) und Sprühelastomeren verbreitet. Typische Hartschaumstoffe weisen einen Gehalt von 2-3 kg/m³ eingebautes Diaminotoluol auf. Seltener sind Polyole mit geringeren Anteilen von Diaminotoluol im Molekül. EP-A 1138709 beschreibt Polyole mit 5-14 Gew.% Diaminotoluol im Polyalkylenoxid-Molekül. WO 2006/037540 beschreibt Hartschaumstoffe auf Basis von Mischungen aus Diaminotoluol-basierten Polyolen mit verschiedenen Kettenlängen.

EP-A 671425 beschreibt die Herstellung von hochelastischen Flammschutzmittel-haltigen Weichschaumstoffen (Stauchhärte <9 kPa bei 40% Kompression) mit Rohdichten von 30- 60 kg/m³. Dabei werden Polyetherpolyole auf Basis von nur 2-3 Gew.-% bis 12 Gew.-% Diaminotoluol und 97-98 Gew.-% bis 88 Gew.-% Ethylenoxid und/oder Propylenoxid eingesetzt. Die beschriebenen Weichschaumstoffe weisen Gehalte von nur 33 g chemisch fest eingebautem Diaminotoluol pro Kubikmeter Schaumstoff auf. In GB-A 1398185 werden vergleichbare Polyole mit 1-4 Gew.% Diaminotoluol und 96-99 Gew.-% Alkylenoxiden beansprucht. Die angegebenen Äquivalentgewichte von 750-3500 g/mol entsprechen umgerechnet einem OH-Zahl-Bereich von 16-75 mg KOH/g. Auch diese werden zur Herstellung von Weichschaumstoffen mit Dichten von < 30 kg/m³ und Stauchhärten von 3,1-10,4 kg/m² eingesetzt.

US-A 4569952 beschreibt den Einsatz von niedermolekularen Diaminotoluol-basierten Polyethern zur Herstellung von sehr leichten Weichschaumstoffen mit einer Dichte von 35-60 kg/m³ (2,14-3,79 lb/ft³) - allerdings nur in Einsatzmengen von 8 - 25 Gew.%.

Aufgabe der Erfindung war es, halbharte Polyurethan-Schaumstoffe mit verbesserten Eigenschaften, insbesondere verbesserter Rückprallelastizität und verringerter Stauchhärte sowie niedrigem Raumgewicht herzustellen, die die vorteilhaften Eigenschaften auch bei der Verwendung von Wasser als Treibmittel behalten.

Diese Aufgabe konnte überraschenderweise mit den erfindungsgemäßen halbharten Polyurethan-Schaumstoffen gelöst werden, indem spezielle Polyolkomponenten auf Basis von 2,3- und 3,4-Diaminotoluol, die als Zwangsanfallprodukte bei der Herstellung von Toluylendiisocyanat anfallen, eingesetzt werden. Es gelang dadurch, Polyurethane mit höheren Raumgewichten und höheren Diaminotoluol-Gehalten herzustellen. Es konnten ohne Einbuße der guten mechanischen Eigenschaften einfache Alkylenoxide wie Ethylenoxid oder Propylenoxid verwendet werden. Dabei wurde überraschend festgestellt, dass eine vollständige Umsetzung aller NH-Gruppen aus dem Diaminotoluol mit den Alkylenoxiden nicht notwendig ist, so dass Polyole, die sowohl OHals auch NH-Endgruppen aufweisen, eingesetzt werden können. Es wurden keine Einbußen in den anwendungstypischen Eigenschaften festgestellt.

Gegenstand der Erfindung sind halbharte Polyurethanschaumstoffe mit einer Dichte von 90 bis 180 kg/m³ (DIN 53420), bevorzugt 120 bis 160 kg/m³ (DIN 53420) und einer Stauchhärte von 20 bis 95 kPa (ISO 3386-1-98 brei 40% Kompression), bevorzugt 35 bis 85 kPa (ISO 3386-1-98 bei 40% Kompression), die erhältlich sind aus
a) organischen Polyisocyanaten und/oder modifizierten organischen Polyisocyanaten auf Basis Diphenylmethandiisocyanat und/oder Polyphenylpolymethylenpolyisocyanat und
b) Isocyanat-reaktive Gruppen enthaltenden Komponenten in Gegenwart von
c) Katalysatoren
d) 1 bis 5 Gew.-%, bevorzugt 1,5 bis 3,5 Gew.-%, besonders bevorzugt 2 bis 3 Gew.-%, bezogen auf die Summe der Komponenten b) bis e), Wasser und
e) gegebenenfalls Hilfsmitteln und/oder Zusatzstoffen,
dadurch gekennzeichnet, dass die Komponenten b)
b1) 84 bis 99,5 Gew.-%, bevorzugt 90 bis 98 Gew.-%, bezogen auf Komponente b), mindestens eines Polyetherpolyols basierend auf Ethylenoxid und/oder Propylenoxid mit einem gewichtsmittleren Äquivalenzgewicht von ≥1000 bis 3000 g/mol, bevorzugt von ≥1200 bis 2000 g/mol und einer mittleren Funktionalität von 2 bis 8,
b2) 0,5 bis 6 Gew.-%, bevorzugt 1 bis 5 Gew.-%, bezogen auf Komponente b), mindestens eines Polyetherpolyols basierend auf Ethylenoxid und/oder Propylenoxid mit Diaminotoluol als Starter mit einem gewichtsmittleren Äquivalenzgewicht von 90-190 g/mol, bevorzugt von 100 bis 160 g/mol, besonders bevorzugt von 110 bis 150 g/mol und
b3) 0 bis 10 Gew.-%, bezogen auf Komponente b), mindestens eines Kettenverlängerungsmittels und/oder Vernetzers enthalten,
wobei das Verhältnis der NCO-Gruppen zu den Isocyanat-reaktiven Gruppen von 0,9:1 bis 1:0,9 beträgt und das Verhältnis der Zahl der entstandenen Harnstoffgruppen zur Zahl der entstandenen Urethangruppen 1:1 bis 2,5:1, vorzugsweise 1,3:1 bis 2,2:1 beträgt und das verwendete Toluylendiamin 2,3-Diaminotoluol und/oder 3,4-Diaminotoluol (sogenanntes ortho-TDA"), das gegebenenfalls bis zu 20 Gew. %, insbesondere bis zu 10 Gew.-% 2,4-und/oder 2,6-Diaminotoluol enthalten kann, ist.

Ein weiterer Gegenstand der Erfindung ist ein Verfahren zur Herstellung der erfindungsgemäßen halbharten Polyurethanschaumstoffe durch Umsetzung von
a) organischen Polyisocyanaten und/oder modifizierten organischen Polyisocyanaten auf Basis Diphenylmethandiisocyanat und/oder Polyphenylpolymethylenpolyisocyanat mit
b) Isocyanat-reaktive Gruppen enthaltenden Komponenten in Gegenwart von
c) Katalysatoren,
d) 1 bis 5 Gew.-%, bevorzugt 1,5 bis 3,5 Gew.-%, besonders bevorzugt 2 bis 3 Gew.-%, bezogen auf die Summe der Komponenten b) bis e), Wasser und
e) gegebenenfalls Hilfsmitteln und/oder Zusatzstoffen,
dadurch gekennzeichnet, dass die Komponenten b)
b1) 84 bis 99,5 Gew.-%, bezogen auf Komponente b), mindestens eines Polyetherpolyols basierend auf Ethylenoxid und/oder Propylenoxid mit einem gewichtsmittleren Äquivalenzgewicht von ≥1000 bis 3000 g/mol, bevorzugt von ≥1200 bis 2000 g/mol und einer mittleren Funktionalität von 2 bis 8,
b2) 0,5 bis 6 Gew.-%, bezogen auf Komponente b), mindestens eines Polyetherpolyols basierend auf Ethylenoxid und/oder Propylenoxid mit Toluylendiamin als Starter mit einem gewichtsmittleren Äquivalenzgewicht von 90-190 g/mol, bevorzugt von 100 bis 160 g/mol, besonders bevorzugt von 110 bis 150 g/mol und
b3) 0 bis 10 Gew.-%, bezogen auf Komponente b), Kettenverlängerungsmittel und/oder Vernetzer enthalten,
wobei das Verhältnis der NCO-Gruppen zu den Isocyanat-reaktiven Gruppen von 0,9:1 bis 1:0,9 beträgt und das Verhältnis der Zahl der entstandenen Harnstoffgruppen zur Zahl der entstandenen Urethangruppen 1:1 bis 2,5:1, vorzugsweise 1,3:1 bis 2,2:1 beträgt und das eingesetzte Toluylendiamin 2,3-Diaminotoluol und/oder 3,4-Diaminotoluol, das gegebenenfalls bis zu 20 Gew. %, insbesondere bis zu 10 Gew.-% 2,4- und/oder 2,6-Diaminotoluol enthalten kann, ist.

Durch die erfindungsgemäße Verwendung der Komponente b2) können insbesondere die mechanischen Eigenschaften wassergetriebener, halbharter Polyurethanschaumstoffe verbessert werden. Es können Schaumstoffe mit einer verbesserten Reissdehnung, einem verringerten Druckverformungsrest und niedrigerer Stauchhärte erhalten werden. Damit gelingt es, die aus der Verwendung von Wasser als Treibmittel resultierenden Nachteile zu überwinden oder zu verringern und gleichzeitig das Zwangsabfallprodukt ortho-TDA technisch sinnvoll zu nutzen.

Als Komponente a) werden organische Polyisocyanate oder modifizierte Polyisocyanate auf Basis Diphenylmethandiisocyanat (MDI) und/oder Polyphenylpolymethylenpolyisocyanat (pMDI) eingesetzt. Das MDI kann isomerenrein oder als Isomerenmischung eingesetzt werden. Mischungen aus MDI und pMDI können ebenfalls eingesetzt werden, sogenanntes Roh-MDI; zweckmäßigerweise mit einem Gehalt an MDI-Isomeren von mindestens 50 Gew.-%, vorzugsweise von 60 bis 100 Gew.-%. Geeignet sind auch sogenannte modifizierte Polyisocyanate auf MDI-Basis, d.h. Produkte, die durch chemische Umsetzung der Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Polyisocyanate. Im Einzelnen kommen beispielsweise mit Urethangruppen modifizierte Polyisocyanate aus 4,4'-MDI, 4,4'- und 2,4'-MDI-lsomerenmischungen oder Roh-MDI, insbesondere mit einem NCO-Gehalt von 28 bis 14 Gew.-% in Betracht.

Als Komponente b1) finden insbesondere Polyetherpolyole mit einer mittleren Funktionalität von durchschnittlich 2 bis 8, vorzugsweise 2 bis 6 und insbesondere 2 bis 4 und mit einem gewichtsmittleren Äquivalenzgewicht von durchschnittlich 1000 bis 3000, vorzugsweise 1200 bis 2000 Verwendung. Geeignet sind auch Mischungen aus diesen Polyetherpolyolen mit Polyesterpolyolen.

Zur Herstellung der halbharten Polyurethanschaumstoffe werden vorzugsweise zusätzlich Kettenverlängerungs- und/oder Vernetzungsmittel b3) mitverwendet. Als derartige Mittel kommen polyfunktionelle, insbesondere di-und trifunktionelle Verbindungen mit Molekulargewichten von 18 bis 400, vorzugsweise von 62 bis 300 in Betracht. Verwendet werden beispielsweise Di-und/oder Trialkanolamine, wie z.B. Diethanolamin und Triethanolamin, aliphatische Diole und/oder Triole mit 2 bis 6 Kohlenstoffatomen im Alkylenrest, wie z.B. Ethan-, 1,4-Butan-, 1,5-Pentan-, 1,6-Hexandiol, Glycerin und/oder Trimethylolpropan, Wasser und niedermolekulare Ethoxylierungs-und/oder Propoxylierungsprodukte, hergestellt aus den vorgenannten Dialkanolaminen, Trialkanolaminen, Diolen und/oder Triolen sowie aliphatischen und/oder aromatischen Diaminen wie z.B. 1,2-Ethan-, 1,4-Butan, 1,6-Hexandiamin, 2,4-und/oder 2,6-Toluylen-diamin, 4,4'-Diamino-diphenylmethan, 3,3'-di-und/oder 3,3', 5,'-tetraalkyl-substituierten 4,4'Diamino-diphenylmethanen als Startermolekülen und Alkylenoxid oder -gemischen. Als Kettenverlängerungsmittel b3) vorzugsweise eingesetzt werden Dialkanolamine, Diole und/oder Triole und insbesondere Ethandiol, Butandiol-1,4, Hexandiol-1,6, Diethanolamin, Trimethylolpropan und Glycerin oder Mischungen aus mindestens zwei der vorgenannten Verbindungen. Die Kettenverlängerungs- und/oder Vernetzungsmittel kommen zweckmäßigerweise in Mengen von 0 bis 10 Gew.-%, bezogen auf Komponente b) zur Anwendung.

Als Treibmittel d) dient vorzugsweise Wasser, das mit Isocyanatgruppen unter Bildung von Kohlendioxid als Treibgas reagiert. Die Wassermengen, die zweckmäßigerweise eingesetzt werden, betragen 1 bis 5 Gew.-%, vorzugsweise 1,5 bis 3,5 Gew.-% und insbesondere 2,0 bis 3,0 Gew.-%, bezogen auf die Summe der Komponenten b) bis e). Im Gemisch mit Wasser können auch chemisch wirkende (z. B. Carbonsäuren) und physikalisch wirkende Treibmittel eingesetzt werden. Hierzu gehören auch Luft, Stickstoff, Kohlendioxid und Argon. Die erforderliche Menge an Treibmitteln kann in Abhängigkeit von der gewünschten Schaumstoffdichte auf einfache Weise ermittelt werden.

Als Katalysatoren c) werden der Reaktionsmischung übliche Polyurethankatalysatoren einverleibt. Zweckmäßigerweise verwendet werden basische Polyurethankatalysatoren, beispielsweise tertiäre Amine, wie Dimethylbenzylamin, Dicyclohexylmethylamin, Dimethylcyclohexylamin, Tetramethyldiamino-diethylether, Bis(dimethylaminopropyl)-harnstoff, N-Methyl-bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethylaminoethoxy)ethanol, N-[2-[2-(Dimethylamino)ethoxy]ethyl]-N-methyl-1,3-propandiamin, 1,1' ((3-(Dimethylamino)propyl)imino)bis-2-propanol, 1-[Bis[3-(dimethylamino)propyl]amino]-2-propanol, 1,3-Bis(dimethylamino)propan-2-ol, 3-Dimethylaminopropylharnstoff, 2-[(2-[2-(Dimethylamino)ethoxy] ethyl)methylamino] ethanol, 2-(Hydroxy-ethoxy-ethyl)2-azabicyclo(2.2.1)heptan, Hydroxypropylimidazol, 6-Dimethylaminohexan-1-ol, Hydroxyethylimidazol, Aminopropylimidazol, Aminoethylimidazol, N,N' ,N"-Tris-(dialkylaminoalkyl)-hexahydrotriazin, z.B. N,N' ,N"-Tris-(dimethylaminopropyl)-s-hexahydrotriazin, Di-(4-dimethylaminocyclohexyl)-methan und insbesondere Triethylendiamin. Geeignet sind jedoch auch Metallsalze, wie Eisen(II)-chlorid, Zinkchlorid, Bleioctoat Wismut-, Titan-, Zink- und Zinnsalze, wie Zinndioctoat, Zinndiethylhexoat und Dibutylzinndilaurat sowie insbesondere Mischungen aus tertiären Aminen und organischen Zinnsalzen. Bewährt hat sich insbesondere eine Katalysatorkombination, die als wesentliche Komponenten enthält: Triethylendiamin, Bis-(dimethylaminoethyl)ether, 2-(Dimethylaminoethoxy)ethanol, Dibutylzinndilaurat und vorzugsweise in folgenden Gewichtsmengenverhältnissen vorliegen: 0,2 bis 1,5 zu 0,1 bis 0,2 zu 0,1 bis 0,25 zu 0,1 bis 0,3 zu 0,05 bis 0,15. Eingesetzt werden zweckmäßigerweise 0,1 bis 10 Gew.-%, vorzugsweise 0,3 bis 3 Gew.-% Katalysator auf Basis tert. Amine und/oder 0,01 bis 0,5 Gew.-%, vorzugsweise 0,03 bis 0,25 Gew.-%, Metallsalze oder 0,1 bis 5 Gew.-%, vorzugsweise 0,3 bis 3,5 Gew.-% der vorgenannten Katalysatorkombination, bezogen auf das Gewicht der höhermolekularen Verbindungen.

Als Hilfsmittel und/oder Zusatzstoffe e) seien beispielsweise oberflächenaktive Stoffe, Stabilisatoren, Hydrolyseschutzmittel, Porenregler, fungistatisch und bakteriostatisch wirkende Substanzen, Flammschutzmittel, Farbstoffe, Pigmente und Füllstoffe genannt. In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl bzw. Rizinolsäureester und Türkischrotöl, die in Mengen von 0,05 bis 8, vorzugsweise 0,4 bis 5 Gew.-Teilen pro 100 Gew.-Teilen der Komponente b) angewandt werden. Nähere Angaben über die oben genannten anderen üblichen Hilfs-und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoff Handbuch, Polyurethane, Band VII, Hanser-Verlag, München, Wien, 1. und 2. Auflage, 1966 und 1983 zu entnehmen.

Zur Herstellung der halbharten Polyurethanschaumstoffe werden die organischen, gegebenenfalls modifizierten Polyisocyanate und die Komponente b) in Gegenwart von Treibmitteln und Katalysatoren und gegebenenfalls Hilfsmitteln und/oder Zusatzstoffen bei Temperaturen von 0 bis 100°C, vorzugsweise 25 bis 50°C in solchen Mengenverhältnissen zur Reaktion gebracht, dass das Verhältnis von NCO-Gruppen zu Isocyanat-reaktiven Gruppen 0,9:1 bis 1:0,9 beträgt.

Die halbharten Polyurethanschaumstoffe werden zweckmäßigerweise nach dem one shot-Verfahren durch Vermischen von zwei Komponenten A und B hergestellt, wobei die Komponenten b), c), d) und gegebenenfalls e) zu der sogenannten A-Komponente vereinigt und als B-Komponente die Ausgangskomponente a), gegebenenfalls im Gemisch mit c), d) und gegebenenfalls e) verwendet werden. Somit müssen die A-und die B-Komponente vor Herstellung der Polyurethanschaumstoffe nur noch intensiv gemischt werden. Die Reaktionsmischungen können in offenen oder geschlossenen Formwerkwerkzeugen verschäumt werden.

Die hergestellten Polyurethanschaumstoffe besitzen Dichten von 90 bis 180 g/l, vorzugsweise von 120 bis 160 g/l und sind signifikant härter und zugfester als typische oben beschriebene Weichschaumstoffe. Sie weisen ein gutes mechanisches Eigenschaftsniveau auf und sind gut verträglich mit Deckschichten aus thermoplastischen, ggf. nachvernetzten Werkstoffen wie Polyvinylchlorid (PVC), Polypropylen (PP), Acrylnitril-Butadien-Styrol (ABS), Polycarbonat (PC), Styrol-Maleinsäureanhydrid (SMA), thermoplastische Olefine (TPO) und verschiedenen thermoplastischen Elastomeren.

Die halbharten Polyurethanschaumstoffe werden zur Herstellung von Verbundelementen eingesetzt, die bevorzugt einen Träger und eine abdeckende Haut, die aus ggf. nachvernetzten und/oder faserverstärkten Thermoplasten, Elastomeren, Duromeren, Holz, Leder oder Metall besteht, aufweisen.

Die genannten Verbundelemente können im Kraftfahrzeugbau, insbesondere in der Auskleidung des Kraftfahrzeuginnenraumes eingesetzt werden.

Die Erfindung soll anhand der nachfolgenden Beispiele näher erläutert werden. Die in den Beispielen genannten Teile beziehen sich auf das Gewicht.

### Beispiele

### Ausgangsverbindungen:

- Polyol A ist ein Polyalkylenoxid auf Basis Glyzerin und Propylenoxid mit 14% entständigem Ethylenoxidblock. Die OH-Zahl beträgt 27 g KOH pro Gramm Polyol.
- Polyol B ist ein Polyalkylenoxid erhalten durch Umsetzung von ortho-Diaminotoluol mit zunächst Ethylenoxid dann Propylenoxid. Die OH-Zahl betragt 460 g KOH pro Gramm Polyol wobei 5-15% auf nicht abgesättigte sekundäre NH-Gruppen entfallen. Die CAS-Nummer ist 67800-94-6.
- Polyol C ist ein Polyalkylenoxid auf Basis Glyzerin und Propylenoxid mit yyy% entständigem Ethylenoxid-block. Die OH-Zahl beträgt xxx g KOH pro Gramm Polyol.
- Polyol D ist ein Polyester auf Basis von Adipinsäure, Hexandiol und Trimethylolpropan mit einer OH-Zahl von 109 mg KOH/g.
- Polyol E ist ein Polyalkylenoxid auf Basis Glyzerin und Propylenoxid mit 18% entständigem Ethylenoxidblock. Die OH-Zahl beträgt 28 g KOH pro Gramm Polyol.
- Polyol F ist ein Polyalkylenoxid auf Basis Glyzerin und Propylenoxid mit 18% entständigem Ethylenoxidblock. Die OH-Zahl beträgt 35 mg KOH pro Gramm Polyol.
- Polyol G ist eine Dispersion von Styrol-Acrylnitril-Copolymerisat (42 Gew.%) in Polyol F (58 Gew. %)
- Polyol H ist ein Polyalkylenoxid auf Basis Triethanolamin und Propylenoxid. Die OH-Zahl beträgt 495 g KOH pro Gramm Polyol.
- Polyol I Polyester auf Basis Rizinussäure und Hexandiol mit einem Äquivalentgewicht von 1600 g/mol.
- Katalysator A ist PC CAT NP712 der Firma Performace Chemicals (Hamburg)
- Katalysator B ist Dabco^{®} NE 1070 der Firma AirProducts
- Katalysator C ist Desmorapid^{®} 59IF08 der Firma Bayer MaterialScience AG
- Katalysator D ist ein Pentahydroxypropylethyldiamin
- Isopur^{®} Schwarzpaste N ist eine Schwarzpaste der Firma ISL Chemie, Kürten.
- Tegostab^{®} B8734 LF2 ist ein Schaumstabilisator der Firma Evonik, Essen.
- Tegocolor^{®} Black HI ist eine Schwarzpaste der Firma Evonik, Essen.

### Versuchsbeschreibung:

Zur Bestimmung der Reaktivität wurde die Polyolmischung in einen Becher aus beschichtetem Papier eingewogen. Das Isocyanat wurde zugegeben. Die Temperatur beider Komponenten (Polyolkomponente und Isocyanatkomponente) betrug 23°C. Die Mischung aus Polyolformulierung und Isocyanat wurde 5 (Versuchsserie B, C) bzw. 10 (Versuchsserie A) Sekunden mit einem Pendraulik-Rührer gerührt. Die "Startzeit" ist die Zeit, bei der das flüssige Gemisch begann, sich in seinem Volumen auszudehnen. Dies war meist mit einem deutlich sichtbaren Umschlag der Farbe zu einem helleren Farbton verbunden. Die "Steigzeit" war dann erreicht, als keine Relativbewegung des aufsteigenden Schaums zum Becherrand mehr erkennbar war.

Die Herstellung der Formteile für die mechanische Prüfung erfolgte in einer mit einem Deckel verschließbaren, mit einer Teflonfolie ausgekleideten Aluminiumform der Dimension 200 × 200 × 40 mm bei einer Formtemperatur von 45°C. Die Temperatur beider Komponenten (Polyolkomponente und Isocyanatkomponente) betrug 23°C. Man vermischte in einem Pappbecher zunächst die Komponenten der Polyolseite mit einem Pendraulik-Rührer, gab dann das Isocyanat zu und verrührte wie oben angegeben für 5 bis 10 Sekunden. Dann goss man das Gemisch in die offene Form und verschloss diese, wobei die Menge so gewählt wurde, dass die angegebene mittlere Rohdichte im Kern des Schaumstoffes resultierte. Nach ca. 10 Minuten wurde entformt und das Verbundelement für 24 Stunden bei Raumtemperatur gelagert. Probenkörper wurden aus dem Kern des Formkörpers geschnitten und gemäß der angegebenen Norm geprüft.

### Prüfmethoden:

| | |
|---|---|
| Druckverformungsrest | DIN 53572 |
| Zugfestigkeit | ISO1798 |
| Bruchdehnung | DIN 53571 |
| Rohdichte | DIN 53420 |
| Stauchhärte bei 40% Kompression | ISO3386-1-98 |

Die Rezepturen der zu vergleichenden Schaumstoffe, insbesondere die Katalyse, wurden so eingestellt, dass einerseits bei gleicher Kennzahl ein vergleichbares Mischungsverhältnis von Polyolformulierung und Isocyanat verwendet werden konnte und gleichzeitig eine vergleichbare Reaktionskinetik, gekennzeichnet durch Startzeit und Steigzeit, eingehalten wurde.

| **Versuchsserie A** | | | |
|---|---|---|---|
| Komponenten | OH-Zahl (mg KOH/g) | Erfindung | Vergleich |
| Polyol D | 110 | 4,85 % | |
| Polyol E | 28 | 79,11 % | |
| Polyol G | 20 | 7,50 % | |
| Isopur Schwarzpaste N | 30 | 0,87 % | |
| Diaminodiethyltoluol Isoinerengemisch | 630 | 0,68 % | |
| Wasser | 6228 | 2,62 % | |
| Katalysator C | 270 | 1,75 % | |
| Polyol H | 500 | - | 2,62 % |
| Polyol B | 460 | 1,75 % | - |
| Katalysator D | 630 | 0,87 % | - |
| OH-Zahl Polyolformulierung (berechnet) in mg KOH/g | | 51 | 52 |

Das eingesetzte Isocyanat ist polymeres MDI mit einer Viskosität von 0,2 Pa·s bei 25°C (Desmodur^{®} 44V20LF der Firma Bayer MaterialScience AG).

| | | Erfindung | Vergleich |
|---|---|---|---|
| Kennzahl | | 90 | |
| Harnstoff/Urethan (berechnet) | | 1,8 | 1,8 |
| Startzeit (Handverschäumung) | [s] | 22 | 23 |
| Steigzeit (Handverschäumung) | [s] | 148 | 150 |
| Kernrohdichte des Formkörpers | [kg/m³] | 145 | 142 |
| Chemisch fest gebundenes Diaminotoluol im Schaumstoff (berechnet) | [g/m³] | 430 | 0 |
| Stauchhärte bei 40% Kompression | [kPa] | 85 | 95 |
| Druckverformungsrest | [%] | 14 | 20 |
| Zugfestigkeit | [kPa] | 422 | 380 |
| Reissdehnung | [%] | 50 | 40 |

| **Versuchsserie B** | Äquivalentgewicht [g/mol NCO-reaktive Gruppe] | Erfindung | Vergleich | Anteil an der Polyolformulierung |
|---|---|---|---|---|
| | | | | |
| Polyol A | 2080 | 61 | 62 | Gew.% |
| Polyol B | 122 | 2 | - | Gew.% |
| Diethanolamin | 35 | 0,45 | 1,45 | Gew.% |
| Polyol C | 1515 | 1,25 | | Gew.% |
| Polyol D | 510 | 1 | | Gew.% |
| Isopur^{®} Schwarzpaste N | 1870 | 0,25 | | Gew.% |
| Rizinusöl | | 15 | | Gew.% |
| Polyol | 1600 | 15 | | Gew.% |
| Katalysator A | | 1,3 | | Gew.% |
| Wasser | | 2,5 | | Gew.% |
| Tegostab^{®} B8734 LF2 | | 0,25 | | Gew.% |
| OH-Zahl (berechnet) | | 226 | 234 | mg KOH/g |

Das eingesetzte Isocyanat besteht zu 35,5% aus Desmodur^{®} 44V20LF, zu 54,5% aus 4,4'-MDI und zu 10% aus Uretdionimin.

| | Erfindung | Vergleich | |
|---|---|---|---|
| Kennzahl (mol NCO*100/mol NCO-reaktive Gruppen) | 95 | | |
| Startzeit (Handverschäumung) | 9 | 8 | [s] |
| Steigzeit (Handverschäumung) | 50 | 51 | [s] |
| Rohdichte im Kern der Schaumstoffe | 133 | 130 | [kg/m³] |
| Harnstoff/Urethan (berechnet) | 1,41 | 1,46 | |
| Chemisch fest gebundenes Diaminotoluol im Schaumstoff (berechnet) | 440 | 0 | [g/m³] |
| Stauchhärte bei 40% Kompression | 42 | 36 | [kPa] |
| Reissdehnung | 74 | 73 | [%] |
| Reissdehnung nach 3 Zyklen a 5 Stunden bei 120°C und >95% Luftfeuchte | 81 | 61 | [%] |
| Reissdehnung nach 7 Tagen 140°C | 56 | 43 | [%] |
| Zugfestigkeit | 387 | 356 | [kPa] |
| Zugfestigkeit nach 3 Zyklen a 5 Stunden bei 120°C und >95% Luftfeuchte | 226 | 200 | [kPa] |
| Zugfestigkeit nach 7 Tagen 140°C | 232 | 193 | [kPa] |
| Druckverformungsrest | 11 | 10 | [%] |
| Druckverformungsrest nach 3 Zyklen a 5 Stunden bei 120°C und >95% Luftfeuchte | 23 | 26 | [%] |
| Druckverformungsrest nach 7 Tagen 140°C | 18 | 18 | [%] |

| **Versuchsserie C** | OH-Zahl (mg KOH/g) | Erfindung 1 | Erfindung2 | Vergleich1 | Vergleich2 |
|---|---|---|---|---|---|
| Polyol B | 415 | 1,7% | 1,7% | | |
| Glyzerin | 1827 | | | 0,8% | 0,8% |
| Polyol C | 37 | 1,25% | 1,25% | 1,23% | 1,23% |
| Polyol A | 27 | 91% | 91% | 91,69% | 91,69% |
| Tegocolor Black HI | 98 | 0,25% | 0,25% | | |
| Isopur Schwarzpaste N | 30 | | | 0,5% | 0,5% |
| Diethanolamin | 1609 | 0,45% | 0,45% | 0,43% | 0,43% |
| Katalysator A | 460 | | 1,6% | 1,6% | |
| Katalysator B | 730 | 1,6% | | | 1,6% |
| Tegostab B 8734 LF2 | 83 | 0,25% | | | |
| Polyol D | 109 | 1% | | | |
| Wasser | 6228 | 2,5% | | | |
| | | 100,00% | 100,00% | 100,00% | 100,00% |
| OH-Zahl der Mischung (berechnet) | | 52 | 48 | 56 | 60 |

Das eingesetzte Isocyanat (22AI03 Partie 62) besteht zu 35,5% aus Desmodur^{®} 44V20LF, zu 54,5% aus 4,4'-MDI und zu 10% aus Uretdionimin.

| | Erfindung | Vergleich2 | |
|---|---|---|---|
| Kennzahl (mol NCO* 100/mol NCO-reaktive Gruppen) | 95 | | |
| Rohdichte im Kern der Schaumstoffe (verdichtet) | 125 | 133 | [kg/m³] |
| Harnstoff/Urethan (berechnet) | 2,1 | 1,75 | |
| Chemisch fest gebundenes Diaminotoluol im Schaumstoff (berechnet) | 360 | 0 | [g/m³] |
| Stauchhärte bei 40% Kompression | 45 | 54 | [kPa] |
| Reissdehnung | 79 | 78 | [%] |
| Reissdehnung nach 3 Zyklen a 5 Stunden bei 120°C und | 144 | 141 | [%] |
| >95% Luftfeuchte | | | |
| Reissdehnung nach 7 Tagen 140°C | 85 | 82 | [%] |

| | Erfindung | Vergleich 1 | |
|---|---|---|---|
| Kennzahl (mol NCO*100/mol NCO-reaktive Gruppen) | 95 | | |
| Rohdichte im Kern der Schaumstoffe (verdichtet) | 125 | 127 | [kg/m³] |
| Harnstoff/Urethan (berechnet) | 2,1 | 1,75 | |
| Chemisch fest gebundenes Diaminotoluol im Schaumstoff (berechnet) | 360 | 0 | [g/m³] |
| Stauchhärte bei 40% Kompression | 35 | 44 | [kPa] |
| Reissdehnung | 84 | 81 | [%] |
| Reissdehnung nach 3 Zyklen a 5 Stunden bei 120°C und >95% Luftfeuchte | 142 | 138 | [%] |
| Reissdehnung nach 7 Tagen 140°C | 46 | 37 | [%] |

## Patentansprüche

1. Halbharte Polyurethanschaumstoffe mit einer Dichte von 90 bis 180 kg/m³ (gemessen gemäß DIN 53420) und einer Stauchhärte von 20 bis 95 kPa (gemessen gemäß ISO 3386-1-98 bei 40% Kompression) erhältlich aus
a) organischen Polyisocyanaten und/oder modifizierten organischen Polyisocyanaten auf Basis Diphenylmethandiisocyanat und/oder Polyphenylpolymethylenpolyisocyanat und
b) Isocyanat-reaktive Gruppen enthaltenden Komponenten in Gegenwart von
c) Katalysatoren
d) 1 bis 5 Gew.-%, bezogen auf die Summe der Komponenten b) bis e), Wasser und
e) gegebenenfalls Hilfsmitteln und/oder Zusatzstoffen,
**dadurch gekennzeichnet, dass** die Komponenten b)
b1) 84 bis 99,5 Gew.-%, bezogen auf Komponente b), mindestens eines Polyetherpolyols basierend auf Ethylenoxid und/oder Propylenoxid mit einem gewichtsmittleren Äquivalenzgewicht von ≥1000 bis 3000 g/mol und einer mittleren Funktionalität von 2 bis 8,
b2) 0,5 bis 6 Gew.-%, bezogen auf Komponente b), mindestens eines Polyetherpolyols basierend auf Ethylenoxid und/oder Propylenoxid mit Diaminotoluol als Starter mit einem gewichtsmittleren Äquivalenzgewicht von 90-190 g/mol und
b3) 0 bis 10 Gew.-%, bezogen auf Komponente b), Kettenverlängerungsmittel und/oder Vernetzer enthalten,
wobei das Verhältnis der NCO-Gruppen zu den Isocyanat-reaktiven Gruppen von 0,9:1 bis 1:0,9 und das Verhältnis der Zahl der entstandenen Harnstoffgruppen zur Zahl der entstandenen Urethangruppen 1:1 bis 2,5:1beträgt und das Toluylendiamin 2,3-Diaminotoluol und/oder 3,4-Diaminotoluol, das gegebenenfalls bis zu 20 Gew.-% 2,4- und/oder 2,6-Diaminotoluol enthält, ist.

2. Verfahren zur Herstellung der halbharten Polyurethanschaumstoffe gemäß Anspruch 1 durch Umsetzung von
a) organischen Polyisocyanaten und/oder modifizierten organischen Polyisocyanaten auf Basis Diphenylmethandiisocyanat und/oder Polyphenylpolymethylenpolyisocyanat mit
b) Isocyanat-reaktive Gruppen enthaltenden Komponenten in Gegenwart von
c) Katalysatoren,
d) 1 bis 5 Gew.-%, bezogen auf die Summe der Komponenten b) bis e), Wasser und
e) gegebenenfalls Hilfsmitteln und/oder Zusatzstoffen,
**dadurch gekennzeichnet, dass** die Komponenten b)
b1) 84 bis 99,5 Gew.-%, bezogen auf Komponente b), mindestens eines Polyetherpolyols basierend auf Ethylenoxid und/oder Propylenoxid mit einem gewichtsmittleren Äquivalenzgewicht von ≥1000 bis 3000 g/mol und einer mittleren Funktionalität von 2 bis 8,
b2) 0,5 bis 6 Gew.-%, bezogen auf Komponente b), mindestens eines Polyetherpolyols basierend auf Ethylenoxid und/oder Propylenoxid mit Toluylendiamin als Starter mit einem gewichtsmittleren Äquivalenzgewicht von 90-190 g/mol und
b3) 0 bis 10 Gew.-%, bezogen auf Komponente b), Kettenverlängerungsmittel und/oder Vernetzer enthalten,
wobei das Verhältnis der NCO-Gruppen zu den Isocyanat-reaktiven Gruppen von 0,9:1 bis 1:0,9 beträgt und das Verhältnis der Zahl der entstandenen Harnstoffgruppen zur Zahl der entstandenen Urethangruppen 1:1 bis 2,5:1beträgt und das Toluylendiamin 2,3-Diaminotoluol und/oder 3,4-Diaminotoluol, das gegebenenfalls bis zu 20 Gew. % 2,4- und/oder 2,6-Diaminotoluol enthält, ist.

3. Verwendung der halbharten Polyurethanschaumstoffe gemäß Anspruch 1 zur Herstellung von Verbundelementen, bevorzugt aus einem Träger und einer abdeckenden Haut, die aus ggf. nachvernetzten und/oder faserverstärkten Thermoplasten, Elastomeren, Duromeren, Holz, Leder oder Metall besteht.

4. Verwendung der genannten Verbundelemente gemäß Anspruch 3 im Kraftfahrzeugbau, insbesondere in der Auskleidung des Kraftfahrzeuginnenraumes.

## Claims

1. Semi-rigid polyurethane foams having a density of 90 to 180 kg/m³ (measured to DIN 53420) and a compressive strength of from 20 to 95 kPa (measured to ISO 3386-1-98 at 40% compression) which are obtainable from
a) organic polyisocyanates and/or modified organic polyisocyanates based on diphenylmethane diisocyanate and/or polyphenyl polymethylene polyisocyanate, and
b) isocyanate-reactive components in the presence of
c) catalysts
d) 1 to 5 wt%, based on total components b) to e), of water and
e) optionally auxiliaries and/or addition agents,
**characterized in that** the components b) contain
b1) 84 to 99.5 wt%, based on component b), of at least one polyether polyol based on ethylene oxide and/or propylene oxide and having a weight-average equivalence weight of ≥1000 to 3000 g/mol and an average functionality of 2 to 8,
b2) 0.5 to 6 wt%, based on component b), of at least one polyether polyol based on ethylene oxide and/or propylene oxide with diaminotoluene as starter and having a weight-average equivalence weight of 90-190 g/mol, and
b3) 0 to 10 wt%, based on component b), of chain-extending agent and/or crosslinker,
wherein the ratio of NCO groups to isocyanate-reactive groups is in the range from 0.9:1 to 1:0.9 and the ratio of the number of urea groups formed to the number of urethane groups formed is in the range from 1:1 to 2.5:1 and the tolylenediamine is 2,3-diaminotoluene and/or 3,4-diaminotoluene, which may contain up to 20 wt% of 2,4- and/or 2,6-diaminotoluene.

2. Process for producing the semi-rigid polyurethane foams of Claim 1 by reaction of
a) organic polyisocyanates and/or modified organic polyisocyanates based on diphenylmethane diisocyanate and/or polyphenyl polymethylene polyisocyanate, and
b) isocyanate-reactive components in the presence of
c) catalysts
d) 1 to 5 wt%, based on total components b) to e), of water and
e) optionally auxiliaries and/or addition agents,
**characterized in that** the components b) contain
b1) 84 to 99.5 wt%, based on component b), of at least one polyether polyol based on ethylene oxide and/or propylene oxide and having a weight-average equivalence weight of ≥1000 to 3000 g/mol and an average functionality of 2 to 8,
b2) 0.5 to 6 wt%, based on component b), of at least one polyether polyol based on ethylene oxide and/or propylene oxide with tolylenediamine as starter and having a weight-average equivalence weight of 90-190 g/mol, and
b3) 0 to 10 wt%, based on component b), of chain-extending agent and/or crosslinker,
wherein the ratio of NCO groups to isocyanate-reactive groups is in the range from 0.9:1 to 1:0.9 and the ratio of the number of urea groups formed to the number of urethane groups formed is in the range from 1:1 to 2.5:1, and the tolylenediamine used is 2,3-diaminotoluene and/or 3,4-diaminotoluene, which may contain up to 20 wt% of 2,4- and/or 2,6-diaminotoluene.

3. Use of semi-rigid polyurethane foams according to Claim 1 for production of composite elements, preferably comprising a backing and a covering skin which consists of optionally postcrosslinked and/or fibre-reinforced thermoplastics, elastomers, thermosets, wood, leather or metal.

4. Use of said composite elements according to Claim 3 in motor vehicle building, especially in lining the motor vehicle interior.

## Revendications

1. Mousses de polyuréthane semi-rigides ayant une densité de 90 à 180 kg/m³ (mesurée selon DIN 53420) et une dureté à l'écrasement de 20 à 95 kPa (mesurée selon ISO 3386-1-98 à une compression de 40 %), pouvant être obtenues à partir de
a) polyisocyanates organiques et/ou polyisocyanates organiques modifiés à base de diphénylméthane-diisocyanate et/ou polyphénylpolyméthylène-polyisocyanate et
b) composants contenant des groupes réactifs avec des isocyanates, en présence de
c) catalyseurs
d) 1 à 5 % en poids, par rapport à la somme des composants b) à e), d'eau et
e) éventuellement d'adjuvants et/ou d'additifs,
**caractérisées en ce que** les composants b) contiennent
b1) 84 à 99,5 % en poids, par rapport au composant b), d'au moins un polyétherpolyol à base d'oxyde d'éthylène et/ou d'oxyde de propylène, ayant une masse équivalente moyenne en poids de ≥ 1 000 à 3 000 g/mole et une fonctionnalité moyenne de 2 à 8,
b2) 0,5 à 6 % en poids, par rapport au composant b), d'au moins un polyétherpolyol à base d'oxyde d'éthylène et/ou d'oxyde de propylène avec du diaminotoluène en tant qu'amorceur, ayant une masse équivalente moyenne en poids de 90 - 190 g/mole et
b3) 0 à 10 % en poids, par rapport au composant b), d'agents d'extension de chaîne et/ou d'agents de réticulation,
le rapport des groupes NCO aux groupes réactifs avec des isocyanates valant de 0,9:1 à 1:0,9 et le rapport du nombre des groupes urée résultants au nombre des groupes uréthane résultants valant de 1:1 à 2,5:1 et la toluylènediamine étant le 2,3-diaminotoluène et/ou le 3,4-diaminotoluène, qui éventuellement contient jusqu'à 20 % en poids de 2,4- et/ou 2,6-diaminotoluène.

2. Procédé pour la production des mousses de polyuréthane semi-rigides selon la revendication 1, par mise en réaction de
a) polyisocyanates organiques et/ou polyisocyanates organiques modifiés à base de diphénylméthane-diisocyanate et/ou polyphénylpolyméthylène-polyisocyanate avec
b) des composants contenant des groupes réactifs avec des isocyanates, en présence de
c) catalyseurs
d) 1 à 5 % en poids, par rapport à la somme des composants b) à e), d'eau et
e) éventuellement d'adjuvants et/ou d'additifs,
**caractérisé en ce que** les composants b) contiennent
b1) 84 à 99,5 % en poids, par rapport au composant b), d'au moins un polyétherpolyol à base d'oxyde d'éthylène et/ou d'oxyde de propylène, ayant une masse équivalente moyenne en poids de ≥ 1 000 à 3 000 g/mole et une fonctionnalité moyenne de 2 à 8,
b2) 0,5 à 6 % en poids, par rapport au composant b), d'au moins un polyétherpolyol à base d'oxyde d'éthylène et/ou d'oxyde de propylène avec de la toluylènediamine en tant qu'amorceur, ayant une masse équivalente moyenne en poids de 90 - 190 g/mole et
b3) 0 à 10 % en poids, par rapport au composant b), d'agents d'extension de chaîne et/ou d'agents de réticulation,
le rapport des groupes NCO aux groupes réactifs avec des isocyanates valant de 0,9:1 à 1:0,9 et le rapport du nombre des groupes urée résultants au nombre des groupes uréthane résultants valant de 1:1 à 2,5:1 et la toluylènediamine étant le 2,3-diaminotoluène et/ou le 3,4-diaminotoluène, qui éventuellement contient jusqu'à 20 % en poids de 2,4- et/ou 2,6-diaminotoluène.

3. Utilisation des mousses de polyuréthane semi-rigides selon la revendication 1, pour la fabrication d'éléments composites, de préférence à base d'un support et d'une peau de recouvrement, qui consiste en matières thermoplastiques éventuellement post-réticulées et/ou renforcées avec des fibres, élastomères, duromères, bois, cuir ou métal.

4. Utilisation desdits éléments composites selon la revendication 3 dans la construction de véhicules automobiles, en particulier dans l'habillage de l'habitacle de véhicules automobiles.
